(19) Europäisches Patentamt
European Patent Office
Office européen des brevets

(11) **EP 1 498 864 A1**

(12) **EUROPEAN PATENT APPLICATION**
published in accordance with Art. 158(3) EPC


(43) Date of publication:
**19.01.2005 Bulletin 2005/03**

(21) Application number: **03719152.5**

(22) Date of filing: **21.04.2003**

(51) Int Cl.[7]: **G09B 29/00**

(86) International application number:
**PCT/JP2003/005038**

(87) International publication number:
**WO 2003/090184 (30.10.2003 Gazette 2003/44)**

(84) Designated Contracting States:
**AT BE BG CH CY CZ DE DK EE ES FI FR GB GR HU IE IT LI LU MC NL PT RO SE SI SK TR**

(30) Priority: **22.04.2002 JP 2002119513**
**21.08.2002 JP 2002240548**



(71) Applicant: **DGS Computer**
**Hachiouji-shi, Tokyo 192-0364 (JP)**

(72) Inventors:
- **Iwata, Kansei**
  **Hachiouji-shi, Tokyo 192-0363 (JP)**
- **Daniel, Visan**
  **Hachiouji-shi, Tokyo 192-0364 (JP)**
- **Picu, Florin**
  **Sagamihara-shi, Kanagawa 229-0034 (JP)**

(74) Representative: **Hano, Christian, Dipl.-Ing. et al**
**v. Füner Ebbinghaus Finck Hano**
**Mariahilfplatz 2 & 3**
**81541 München (DE)**


(54) **DIGITAL ALTIMETRIC MAP DRAWING METHOD AND DEVICE**


(57) A method for producing a digital topographic map, comprising the following steps of: a step for dividing a basic map, which is produced through UTM drawing method, into grid-like sectors at a predetermined distance, and further dividing the sector obtained into a smaller one (4), thereby producing small sectors while interpolating discontinuous data being in short between each sectors and within each of the sectors; a step for producing digital data by relating x,y coordinates of the small sector (4) obtained and a sea level obtained through measurement, upon basis of an algorithm having a rationality, and connecting the small sectors (4) being same in the sea level thereof with a straight line, thereby producing a first topographic map (5), on which contour lines (6) are formed with lines of segments; and a step for conducting a smoothing process upon the contour lines (6) of said first topographic map (5), mathematically, thereby producing a second topographic map (7), on which the contour lines (6) are formed with curved lines, being smoother than the contour liens (6) of said first topographic map, which are formed with the lines of segments, thereby enabling to obtain the digital topographic map, displaying the contour lines (6) with smoothly curved lines thereon.

FIG. 6
PRODUCE SMALL SECTOR BY DIVIDING BASIC MAP PRODUCED THROUGH UTM METHOD
S 1
PRODUCE DIGITAL DATA BY RELATING x,y COORDINATES OF SMALL SECTION AND MEASURED DATA
S 2
PRODUCE 1ST TOPOGRAPHIC MAP FORMED WITH CONTOUR LINES OF STRAIGHT LINES, BY CONNECTING EACH SMALL SECTOR OF SAME SEA LEVEL BY STRAIGHT LINE
S 3
PRODUCE 2ND TOPOGRAPHIC MAP FORMED WITH CONTOUR LINES OF SMOOTHLY CURVED LINE, THOUGH CONDUCTING SMOOTHING PROCESS ON CONTOUR LINES OF 1ST TOPOGRAPHIC MAP, MATHEMATICALLY
S 4
PRODUCE 3RD TOPOGRAPHIC MAP, THROUGH CONDUCTING PROCESS TO CHANGE 2ND TOPOGRAPHIC MAP OF IRREGULAR QUADRILATERAL PRODUCED ON BASIS OF BASIC MAP INTO RIGHT-ANGLED QUADRATE, MATHEMATICALLY
S 5


EP 1 498 864 A1

## Description

### TECHNICAL FIELD

The present invention relates to a producing method of producing a digital topographic map, by producing contour lines through mathematical processing of survey data, and in particular, it relates to a producing method and a producing apparatus of producing a digital topographic map, for producing the digital topographic map by composing map elements thereon, such as, a sea shoreline, a river, a lake, a railway, a road, a building, etc., for example, which are already digitalized, by using the contour lines, which are produced through such the mathematical processing of the survey data.

### BACKGROUND ARTS

Conventionally, on a map or a topographic map produced by Geographical Survey Institute of Japan, ups and downs or relief upon the surface of the earth are presented by means of the contour lines displayed thereon, however when producing such a map displaying such the contour lines thereon, it is produced by connecting between the measured points, which are same to each other on the sea level, one by one, by handworks, while using a design tool, such as, a curved rule or the like, for example, among a large numbers of the measured points obtained, the sea levels of which are measured through a trigonometrical survey, upon the basis of a benchmark.

With the method mentioned above, however, for obtaining such the map, but being much higher in the accuracy thereof, it must be produced from an expansively large number of the measured points, and then it necessitates much times and labors for producing the contour lines, and also, since the map must be produced through treating or handling the survey data obtained, by hands, then there will easily occurs artificial errors therein, as well as, necessitating much times and labors therein; therefore, there is a problem or a drawback that the topographic map produced is low in accuracy and/or reliability thereof, and so on.

On the other hand, there is also tried a method, of digitalizing the conventional topographic map, on which the relief on the earth surface is represented by the contour lines, through a process of pattern recognition, etc. , for example, so as to treat a curved-line process upon the digital data obtained, thereby producing the topographic map, or alternatively a method of producing the topographic map through treating an image processing upon the coordinate data obtained, which is produced through reading-out of the contour lines by means of a coordinate read-out apparatus. However, with such the method of the former, there is a drawback that a topographic map cannot be produced with smoothly curved lines, due to unevenness or ununiformity in the property of the digital data obtained, etc. , and also with such the method of the latter, there is a drawback that difficulty is accompanied with, in particular, on the processing thereof, because an mount of the coordinate data is expansively large.

Also, with the conventional topographic map, even if the data of the contour line is vector data of digital, however since the contour line itself has not the information about a direction of height, i.e., three (3) -dimensional information, there are also the following drawbacks; for example, it is impossible to read out a difference of altitude on the configuration of the land when planning a road on the map, or to make a simulation, in particular, when trying it by means of a CAD, upon the way of gathering and/or rushing into a valley when rain falls in an area of the valley presented on the map, or upon in which direction the water flows out when rain falls on a watershed or a dividing ridge, on the boundary thereof, or upon the location at which a steel tower should be constructed on the map, so as to lay a power-transmission line or a communication line, or upon the way or the direction of pyroclastic flow, when a volcano erupts, or upon the way, how a seismic sea wave comes up to the shoreline, etc.

An object of the present invention, for dissolving and/or improving such the drawbacks mentioned above, is to provide a producing method of digital topographic map, for enabling to produce the digital topographic map with high accuracy, within a short time-period, easily.

Also, other object of the preset invention is to provide a producing method and a producing apparatus of the digital topographic map, for producing the contour lines of the configuration of the land into the form of 3-dimensssional digital data, so that the contour lines obtained can be used to compose with the map elements, such as, the shoreline, the river, the lake, the railway, the road, the building, etc., for example, which are already digitalized, as a main element therein.

### DISCLOSURE OF THE INVENTION

According to the present invention, there is provided a method for producing a digital topographic map, comprising the following steps of : a step for dividing abasicmap, which is produced through UTM drawing method, into grid-like sectors at a predetermined distance, and further dividing the sector obtained into a smaller one, thereby producing small sectors while interpolating discontinuous data being in short between each sectors and within each of the sectors; a step for producing digital data by relating x,y coordinates of the small sector obtained and a sea level obtained through measurement, upon basis of an algorithm having a rationality, and connecting the small sectors being same in the sea level thereof with a straight line, thereby producing a first topographic map, on which contour lines are formed with lines of segments; and a step for conducting a smoothing process upon the contour lines of said first topographic map, mathematically, thereby producing a second topographic map, on which the contour lines are formed with curved lines, being smoother than the contour liens of said first topographic map, which are formed with the lines of segments.

With this, through processing each of the steps by means of a computer, the digital topographic map can be obtained, on which the contour lines are displayed by smoothly curved-lines, in a short time, easily, and also there occurs less artificial mistakes, comparing to the case where an extensive amount of measurement data is processed by handworks; therefore, an improvement can be achieved, greatly, in particular, on accuracy and reliability of the topographic map.

According to the present invention, in the method for producing a digital topographic map as described in the above, the digital data for producing said second topographic map therefrom is stored with map element data into a recording means, and those data are displayed on a displaying means, being composed into a single or a layer structure thereof, or can be outputted on a paper or the like, as a topographic map.

With this, it is possible to compose the map elements onto the second topographic map, on which the contour lines are displayed, easily, or to conduct the operation of outputting it in the form of the topographic map, on a paper or the like, or to compose only a portion of the map elements depending upon the necessity thereof; therefore, a usability or convenience of the topographic map can be improved further.

According to the present invention, in the method for producing a digital topographic map as described in the above, a checking function is provided for checking on whether the mathematical process is conducted, appropriately or not, so that the lines of segments come cross with each other, when producing said first topographic map, by connecting said small sectors having the same sea level, sequentially.

With this, the digital data obtained can be improved on the reliability, and therefore the digital contour map can be obtained, being higher in the accuracy thereof.

According to the present invention, in the method for producing a digital topographic map as described in the above, the irregular quadrilateral, which is produced upon basis of the basic map and the map elements through said UTM drawing method is revised and interpolated, mathematically, to be a right-angled quadrilateral, thereby producing a third topographic map.

With this, no shift occurs on the contour line and/or the map element, such as, the contour line, the railway, the road, the boundary line, etc., when gathering the third topographic maps neighboring with each other.

According to the present invention, in the method for producing a digital topographic map as described in the above, user map elements, which are produced independently by a user, are stored into said recording means as a database, and those user map elements and said third topographic map are displayed on said displaying means, being composed into a single or a layer structure thereof, or can be outputted on a paper or the like, as a topographic map.

With this, it is possible to obtain the newest topographic map and/or the topographic map fitting to the use thereof by a user.

According to the present invention, there is also provided a method for producing a digital topographic map, comprising the following steps of: a step for dividing a basic map, which is produced through UTM drawing method, into grid-like sectors at a predetermined distance, and further dividing the sector obtained into a smaller one, thereby producing small sectors while interpolating discontinuous data being in short between each sectors and within each of the sectors; a step for producing digital data by relating x,y coordinates of the small sector obtained and a sea level obtained through measurement, upon basis of an algorithm having a rationality, and connecting the small sectors being same in the sea level thereof with a straight line, thereby producing a first topographic map, on which contour lines are formed with lines of segments; a step for conducting a smoothing process upon the contour lines of said first topographic map, mathematically, thereby producing a second topographic map, on which the contour lines are formed with curved lines, being smoother than the contour liens of said first topographic map, which are formed with the lines of segments; a step for revising and interpolating the irregular quadrilateral, which is produced upon basis of the basic map and the map elements through said UTM drawing method, mathematically, to be a right-angled quadrilateral, thereby producing a third topographic map from said second topographic map; and a step for storing digital data for producing said third topographic map, into a recording means, together with map element data, and thereby displaying those data on a displaying means, being composed into a single or a layer structure thereof, or outputting them on a paper or the like, as a topographic map.

With this, through processing each of the steps by means of a computer, the digital topographic map can be obtained, on which the contour lines are displayed by smoothly curved-lines, in a short time, easily, and also there occurs less artificial mistakes, comparing to the case where an extensive amount of measurement data is processed by handworks; therefore, an improvement can be achieved, greatly, in particular, on accuracy and reliability of the topographic map.

Also, the third topographic map is produced from the second topographic map, through conducting a mathematic revision and interpolation thereupon, so that an irregular quadrilateral, which is produced upon the basis of the basic map and the map elements obtained through the UTM drawing method, comes into a right-angled quadrilateral; therefore, there occurs no shift on the contour line and/or the map element, such as, the lake or swamp, the sea, the shoreline, the railway, the road, the construction, the boundary line of the city, town or village, etc., when gathering the third topographic maps neighboring with each other, so as to display them on the displaying means, or when outputting it on a paper or the like, in the form of the topographic map.

According to the present invention, in the method for producing a digital topographic map as described in the above, upon the third topographic map displayed on said displaying means are displayed a color scale, which is divided by colors depending upon the sea levels, and a dialog having a slide bar, which is freely movable along said color scale, whereby said third topographic map can be colored by an arbitrary color for each of the sea levels by moving said slide bar along with said color scale.

With this, it is possible to obtain a color topographic map, coloring a flatland by green color while separately coloring from green color to brown color, sequentially, in accordance with an increase of the sea level, as well as, the third topographic map, on which the classification is made finely by colors through finely designating the coloring region of the contour lines with moving the slide bar, in particular, in the case of the topographic map of, such as, the flatland, where the difference is small in the sea level; therefore, determination can be made on the difference of altitude, easily.

According to the present invention, in the method for producing a digital topographic map as described in the above, upon said third topographic map displayed on said displaying means are displayed a sea level displaying column for indicating a sea level of an arbitrary contour line therein, and a dialog having a color palette for designating a color of the contour lien to be colored, whereby the contour lines of said third topographic map can be colored with an arbitrary color for each of the sea levels thereof by inputting the sea level of the contour line to be colored into said sea level displaying column and a color through said color pallet.

With this, through coloring the contour line at desire by arbitrary color, determination can be made on the contour line of the same sea level, easily, even on the third topographic map having a small distance between the contours lines, so that it is difficult to see the contour line of the same sea level.

According to the present invention, in the method for producing a digital topographic map as described in the above, a sub-screen is displayed on said displaying means, on which said third topographic map is displayed, and on said sub-screen are displayed a third topographic map on a periphery continuous with the third topographic map of an arbitrary place that is displayed on said displaying means, by a map number and/or a map name.

With this, it is possible to grasp the topographic maps in the vicinity of the third topographic map displayed on the displaying means, through watching on the sub-screen, from the map number and the map name therein.

According to the present invention, in the method for producing a digital topographic map as described in the above, on said displaying means is displayed said third topographic map, together with an X-axis cursor and a Y-axis cursor intersecting in a cross, whereby displaying latitude and altitude of said intersecting point are displayed in a portion of said displaying means, by moving said X-axis and said Y-axis cursors into an arbitrary direction, so as to fit the intersecting point at an arbitrary place on said third topographic map.

With this, the third topographic maps displayed on the displaying means are composed with each other, so that the contour line is continuous at a joint portion; therefore, scroll can be made to the third topographic map, continuously, and also determination can be made, easily, on the position where the of the intersecting point of the cursor lies on the topographic map at present, through watching on the sub-screen.

According to the method for producing a digital topographic map as described in the above, points are set up in plural numbers thereof on said third topographic map displayed on said displaying means, and those plural numbers of points are connected by a straight line or a smoothly curved line, whereby displaying a cross-section of said third topographic map, being cut by said straight line or said curved line, in a part of said displaying means.

With this, it is possible to determine the position where the steel tower should be constructed, the position where the steel tower for the high-voltage cable should be constructed, or the route for laying the high-voltage cable, but without necessity of the measurement on the actual construction field, through designing the height of the steel tower or studying on the place where the steel tower should be constructed, by referring to the cross-section view.

According to the present invention, the method for producing a digital topographic map as described in the above, arbitrarily two (2) points are set up on the contour line, having the same sea level upon said third topographic map displayed on said displaying means, intersecting a river thereby, and those two (2) points are connected with a straight line, whereby displaying a cross-section of the river cut by said straight line, in a part of said displaying means, and also calculating out pondage in an upstream side thereof than said straight line, from said contour lines, and said straight line and said cross-section.

With this, it is possible to calculate out, how much of the pondage can be obtained, when constructing a dam at which position on the river displayed on the third topographic map, instantaneously.

According to the present invention, the method for producing a digital topographic map as described in the above, arbitrarily two (2) points are set up on the contour line, having the same sea level, surrounding a lake or a swamp on said third topographic map displayed on said display means, intersecting the lake or the swamp thereby, and those two ( 2 ) points are connectedwith a straight line, whereby displaying a cross-section of the lake or the swamp cut by said straight line, in a part of said display means, and also calculating out pondage of said lake or the swamp, from said contour lines and said cross-section.

With this, the depth of the lake or the swamp and/or the configuration of the bottom portion thereof can be grasped, easily, through looking on the cross-section view, as well as, the pondage of said lake or the swamp can be calculated out, instantaneously.

According to the present invention, in the method for producing a digital topographic map as described in the above, upon said third topographic map displayed on said display means is displayed an arrow of indicating a direction and/or a magnitude of an inclination of configuration of land.

With is, the direction and/or the magnitude of the inclination on the configuration of land can be grasped, easily, with an aid of the arrow displayed on the third topographic map.

According to the present invention, there is further provide an apparatus for producing a digital topographic map, comprising:

a means for dividing a basic map, which is produced through UTM drawing method, into grid-like sectors at a predetermined distance, and further dividing the sector obtained into a smaller one, thereby producing small sectors while interpolating discontinuous data being in short between each sectors and within each of the sectors, and reading sea levels from digital data of the digital topographic map, so as to be aligned on a plane to be blocked, thereby producing mesh-like data, and further storing them as vector data therein; a means for producing a first topographic map, by reading out the vector data for each of the small sectors stored in said storing means, so as to conduct a process of connecting the each small sector with a straight line while selecting a measurement point in vicinity thereof when the sea is same judging from data of def ining tolerance on the sea level, without intersection on those line segments with each other, upon basis of an algorithm having rationality; a means for producing a second topographic map, by conducting a smoothing process upon curved lines, passing through a contact point of the line segments of said first topographic map obtained in said process, and having continuous differential coefficients, mathematically, thereby producing the second topographic map, on which the contour lines are made up with a group of curved lines; a means for producing a third topographic map from said second topographic map, by revising and interpolating an irregular quadrilateral, which is produced upon basis of said basic map produced through the UTM drawing method, and also map elements, mathematically, into a right-angled quadrilateral; a recording means for storing therein said digital data for producing said third topographic map, together with map element data; and

a display means for composing the digital data stored within said recording means into a single or a layer structure, so as to display thereon.

With this, the digital topographic map can be obtained, on which the contour lines are displayed by smoothly curved-lines, in a short time, easily, and also there occurs less artificial mistakes, comparing to the case where an extensive amount of measurement data is processed by handworks; therefore, an improvement can be achieved, greatly, in particular, on accuracy and reliability of the topographic map.

Also, the third topographic map is produced from the second topographic map, through conducting a mathematic revision and interpolation thereupon, so that an irregular quadrilateral, which is produced upon the basis of the basic map and the map elements obtained through the UTM drawing method, comes into a right-angled quadrilateral; therefore, there occurs no shift on the contour line and/or the map element, such as, the lake or swamp, the sea, the shoreline, the railway, the road, the construction, the boundary line of the city, town or village, etc. , when gathering the third topographic maps neighboring with each other, so as to display them on the displaying means, or when outputting it on a paper or the like, in the form of the topographic map.

## BRIEF DESCRIPTION OF DRAWINGS

Those and other objects, features and advantages of the present invention will become more readily apparent from the following detailed description when taken in conjunction with the accompanying drawings wherein:

Fig. 1 is an explanatory view for showing a method for producing a basic map to be used in a producing method of the topographic map, according to the present invention;

Fig. 2 is an explanatory for showing the producing method of the basicmap to be used in the producing method of the topographic map, according to the present invention;

Fig. 3 is an explanatory for showing the producing method of the topographic map, according to the present invention;

Fig. 4 is an explanatory for showing the producing method of the topographic map, according to the present invention;

Fig. 5 is a block diagram for showing a producing apparatus of a digital topographic map to be used in the producing method of the topographic map, according to the present invention;

Fig. 6 is a flowchart for showing the producing method of the topographic map, according to the present invention;

Fig. 7 is a view for showing the digital topographic map, which are divided by colors upon the basis of sea levels, which are obtained through the measurement;

Fig. 8 is a view for showing a first (1st) topographic map, which is obtained through the producing method of the topographic map, according to the present invention;

Fig. 9 is a partial enlarged view of the first topographic map shown in Fig. 8;

Fig. 10 is a view for showing a second (2nd) topographic map, which is obtained through the producing method of the topographic map, according to the present invention;

Fig. 11 is a partial enlarged view of the second topographic map shown in Fig. 10;

Fig. 12 is an explanatory view for showing the condition of collecting third (3rd) topographic maps together, which are obtained through the producing method of the topographic map, according to the present invention;

Fig. 13 is an explanatory view for showing the condition of composing the map elements, such as, resources, etc., onto the third topographic map(s), which is/are obtained through the producing method of the topographic map, according to the present invention;

Figs. 14 (a) and 14(b) are explanatory views for explaining a coordinate conversion of an irregular quadrilateral into equilateral quadrate, within the producing method of the topographic map, according to the present invention;

Fig. 15 is an explanatory view for showing a dialog of paining colors for each of the sea levels, under the condition of being displayed on the third topographic map(s), which is/are obtained through the producing method of the topographic map, according to the present invention;

Fig. 16 is an explanatory view for showing a dialog of paining colors for each of the sea levels, under the condition of being displayed on the third topographic map(s), which is/are obtained through the producing method of the topographic map, according to the present invention;

Fig. 17 is an explanatory view for showing a dialog of paining colors for each of the contour lines, under the condition of being displayed on the third topographic map(s), which is/are obtained through the producing method of the topographic map, according to the present invention;

Fig. 18 is an explanatory view for showing the third topographic maps, under the condition of showing a cursor and a sub-picture thereof, as well, which are obtained through the producing method of the topographic map, according to the present invention;

Fig. 19 is an explanatory view for showing the third topographic map (s) , under the condition of showing a cross-section view and the sub-picture thereof, as well, which is/are obtained through the producing method of the topographic map, according to the present invention;

Fig. 20 is an explanatory view for showing the third topographic map (s), under the condition of showing a cross-section view and the sub-picture thereof, as well, which is/are obtained through the producing method of the topographic map, according to the present invention;

Fig. 21 is an explanatory view for showing the third topographic map(s),under the condition of showing a cross-section view and the sub-picture thereof, as well, which is/are obtained through the producing method of the topographic map, according to the present invention;

Fig. 22 is an explanatory view for showing the third topographic map ( s) , under the condition of showing a cross - section view and the sub-picture thereof, as well, which is/are obtained through the producing method of the topographic map, according to the present invention; and

Fig. 23 is a partial enlarged view of the third topographic map shown in Fig. 22.

**BEST MODE FOR CARRYING OUT THE INVENTION**

Hereinafter, embodiments according to the present invention will be fully explained by referring to the attached drawings.

First of all, explanation will be made briefly, on a UTM drawing method, for producing a topographic map, to be a basis thereof, when producing the digital topographic map.

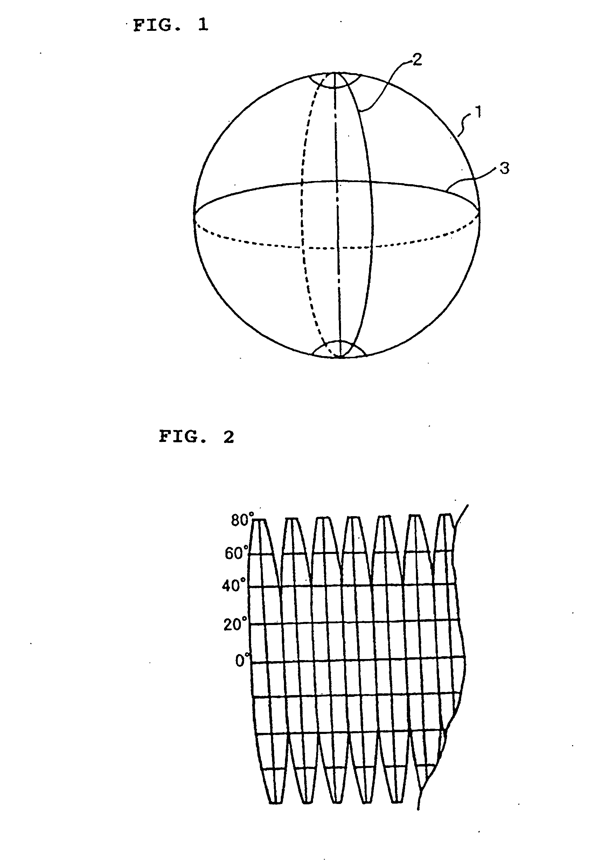

As is shown in Fig. 1, lines connecting between the North Pole and the South Pole, orthogonally crossing the equator, on the earth 1 forming a sphere, are longitude lines 2, and those are latitude lines 3, orthogonally crossing those longitude lines.

When dividing the earth by an angle 6° defined between the longitude lines 2 neighboring to each other, for example, 60 pieces of lines can be drawn onto the earth 1 having the angle of 360°, by one (1) round, and then the longitude can be defined by those longitude lines 2, in the order or sequence thereof.

Also, the latitude can be defined, by assuming that the equator be 0°, while the North Pole and the South Pole 90°, respectively, and then dividing the angle defined therebetween into a predetermined angle.

When projecting the sphere 1, which is divided by the longitude lines 2 and the latitude lines 3, onto a plane through the Gulls-Krugger drawing method, then it comes to be such, as shown in Fig. 2.

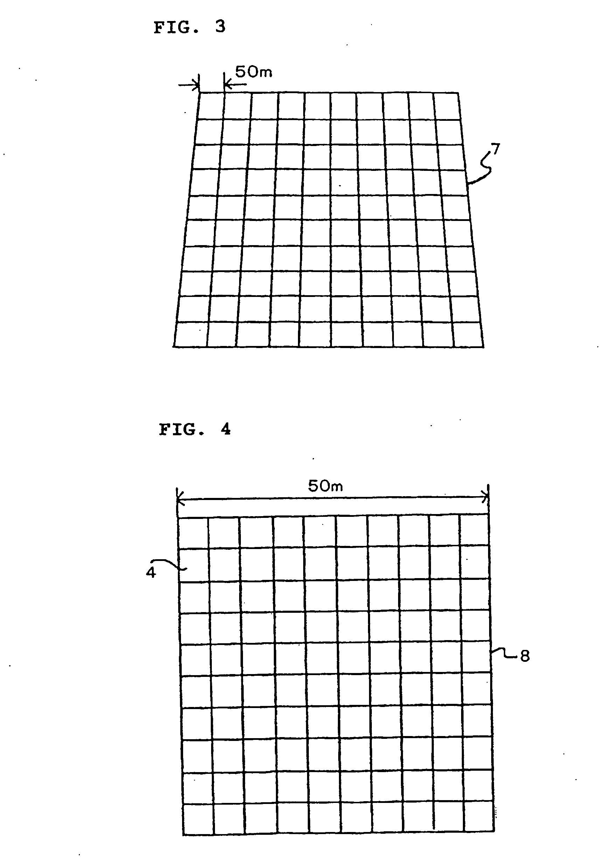

Through projection of the sphere onto the plane, a sector, which is divided by the longitude lines 2 and the latitude lines 3, is brought into an irregular quadrilateral, being narrow in the width on the side of the North Pole or the South Pole, as is shown in Fig. 3; i.e., it is reduced about 0,999 on the upside, if assuming the bottom side thereof is one (1), for example.

The Japanese maps, which are issued by the Geographical Survey Institute of Japan, they are produced through the UTM drawing method mentioned above, and they are scaled down 1/50,000 or 1/25,000, mainly.

On those maps, there are described the contour lines, produced upon the basis of a large amount of measured data, which are obtained the measurement or survey, together with the rivers, the seas, the railways, the roads and also the names of places, etc., in the details thereof.

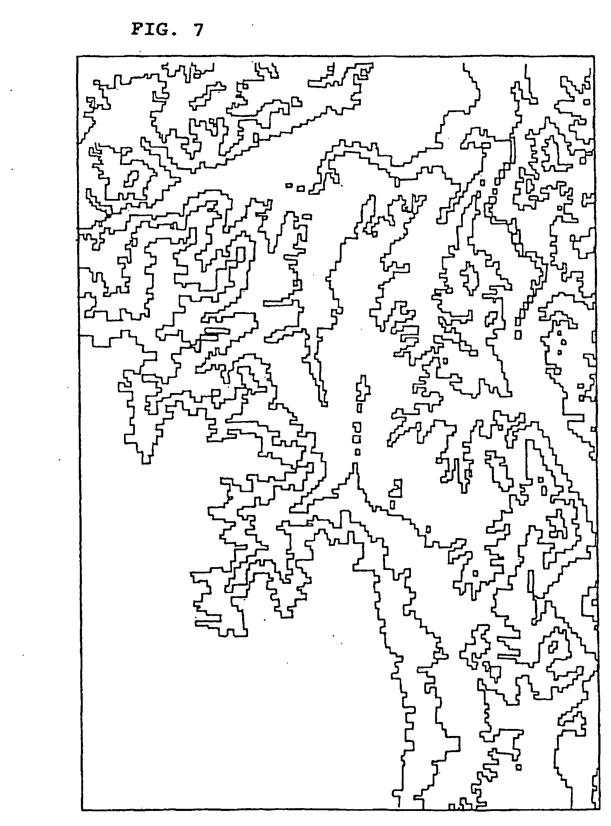

Also, in recent years, the measured data obtained through the measurement is digitalized, and there is also supplied a digital map, which is divided by colors upon the basis of the height from a benchmark (i.e., the sea level), as is shown in Fig. 7.

However, with such the digital topographic map, since there is no indication of the contour lines thereon, therefore it is rough and/or difficult to grasp the sea levels, with an aid of such the contour lines.

Then, according to the present invention, it is to provide a method for producing the digital topographic map displaying the contour lines thereon in the details thereof, upon the basis of the digital data obtained from the digital topographic map, which is issued by the Geographical Survey Institute of Japan.

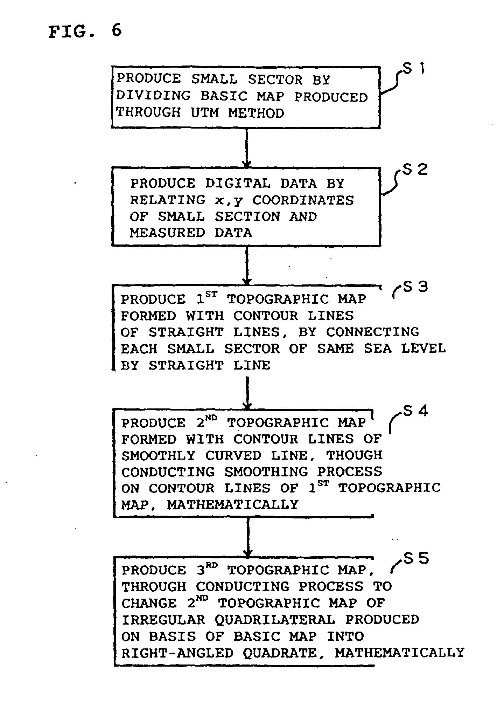

Next, explanation will be given on a producing method thereof, by referring to a flowchart shown in Fig. 6.

In case of obtaining a detailed map, such as, 50m or 25m, for example, shown in Fig. 3, from the map, which is produced through the UTM drawing method mentioned above, it is divided into sectors in a grid-like manner, at a distance 10m, etc., for example.

Further dividing the grid-like sector obtained of 50m squares, for example, into about 1/10, equally, there are formed small grid-like sectors 4, each of which is enclosed by an enclosure as is shown in Fig. 3, however in the case when dividing the grid-like sector of 50m squares into about 1/10, there occurs a discontinuous portion on data, in particular, between the enclosed sectors or within the enclosed sector.

Also, in the case when converting the map in the shape of an irregular quadrilateral, which is produced through the UTM drawing method, into a right-angled equilateral quadrate through a method, which will be mentioned later, there occurs shortage of data on the upside thereof, in particular, when conducting a conversion process of equalizing the length of the upside, being short in the distance on the irregular quadrilateral, to that of the bottom side thereof.

Then, an interpolation is treated upon those discontinuous portions of data, or alternatively, continuous small sectors 4 are produced through an interpolation of shortage of the data, however as the method of that interpolation, a weighting interpolation method or the like is used, having a relatively high accuracy.

Next. the sea level is read in, for each small sector 4 that is obtained through the interpolation, from the digital data of the digital topographic map mentioned above, and it is aligned on a plane, thereby producing a mesh-like data, which is divided into sectors, and then it is stored, as the vector data, into a HD 11 of a topographic map producing system shown in Fig. 4 (step 1).

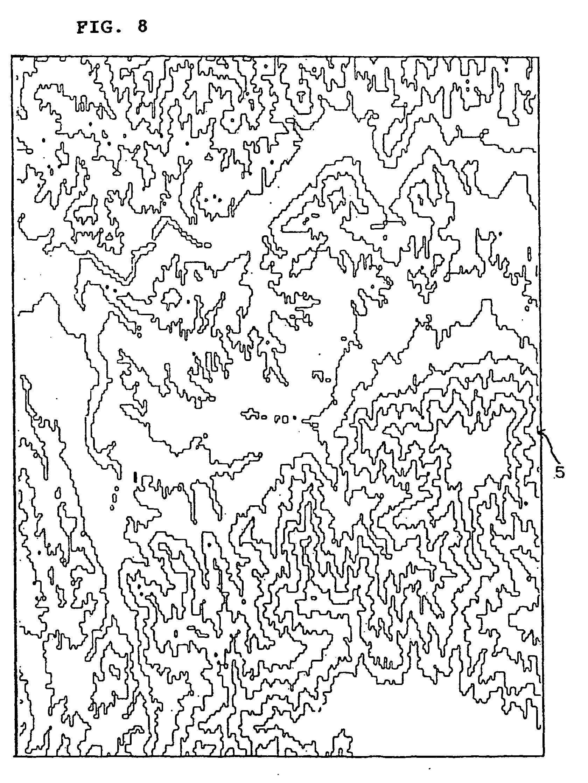

Next, the vector data for the each small sector 4 stored into the HD 11 is read out, to be processed through a CPU 10, thereby producing a first ($1^{st}$) topographic map 5 as shown in Fig. 8, however when producing the first topographic map 5, the sea level "h" is defined in a height or altitude direction and the x,y plane of the small sector (step 2).

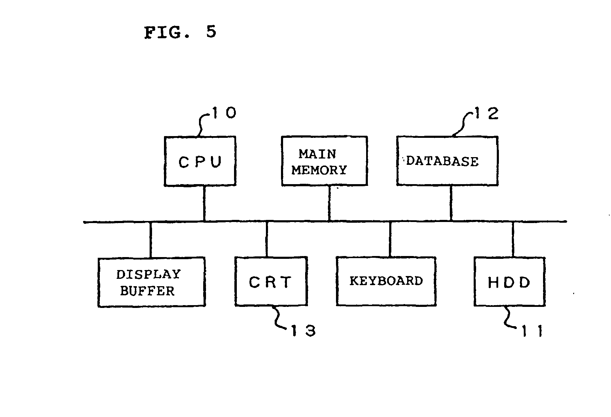

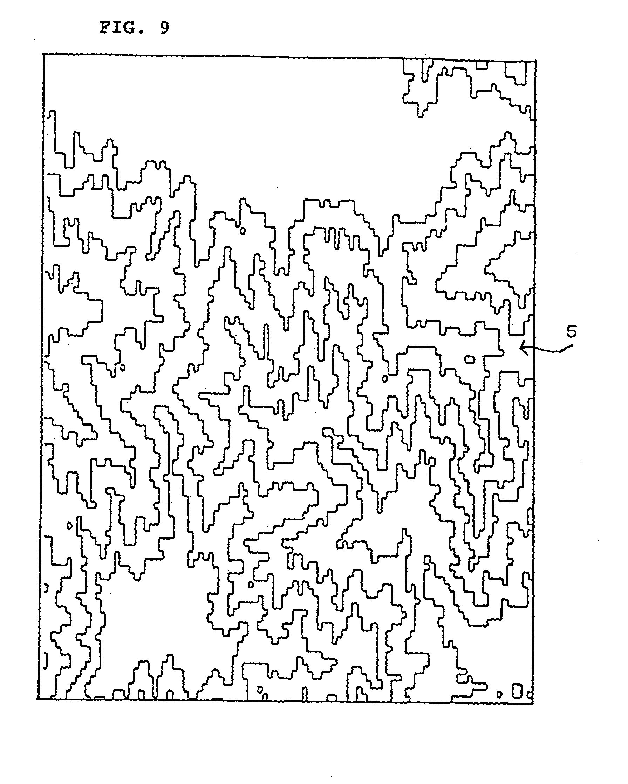

Into a database 12 of the topographic map producing system is stored data, in advance, which defines a tolerance of the sea level "h", and the CPU 10 executes a process of connecting the each small sector 4 with a straight line while selecting a measurement point in the vicinity thereof, when the sea level "h" has a same value, and completing all of the processes for each of the small sectors 4 within the block, there is produced the first topographic map 5, having no crossing between those line segments, as shown in Fig. 5, upon the basis of an algorithm having rationality (step 3). Further, Fig. 9 is an enlarged view of a portion of Fig. 8.

Also, the CPU 10 advances the processes, with provision of checking function of always checking on whether the process of connecting the each small sector 4 with the straight line is appropriately executed or not, during the processing operation mentioned above.

Since the first topographic map 5 obtained has the mesh data, which are aligned in a grid-like manner, and since it is produced by connecting the same sea level "h", sequentially, therefore it can be easily made a right-angled line segment; and also, since the contour lines 6 displaying the configuration of the ground is continuous, then it makes easy a next coming process of producing the contour lines.

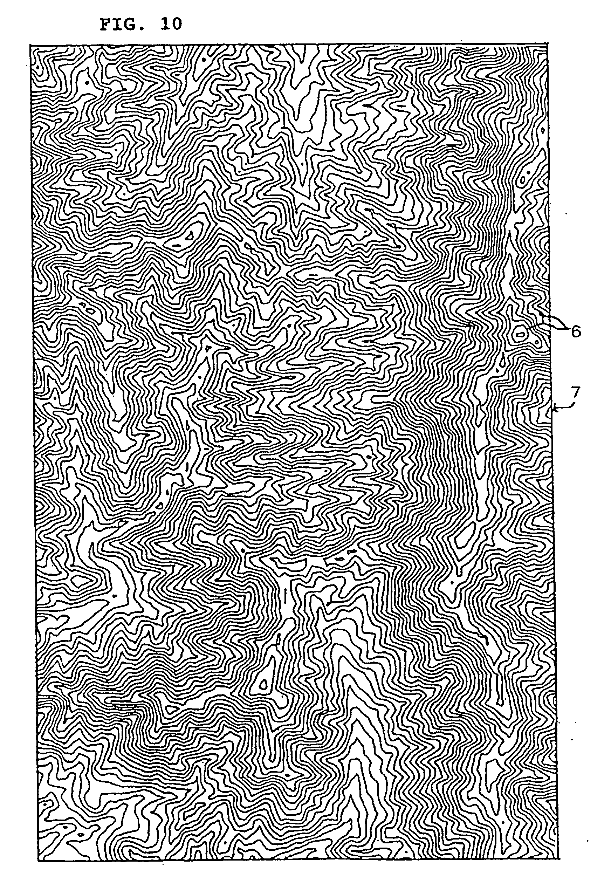

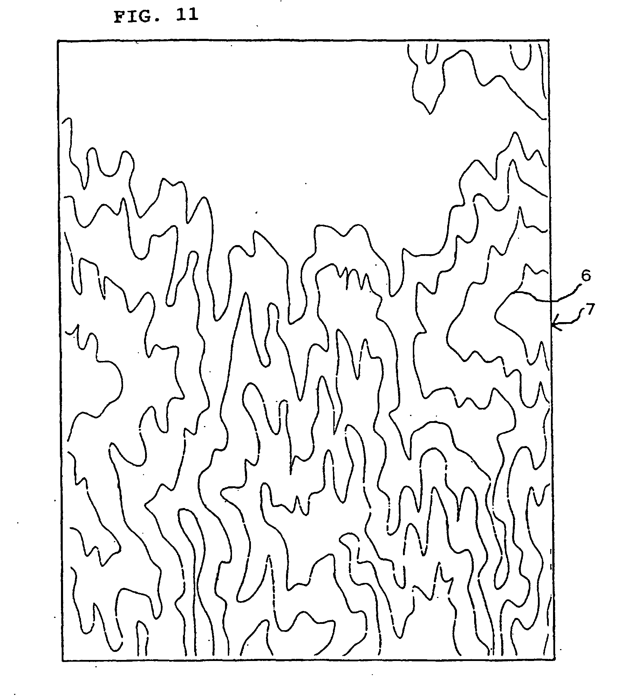

The process of producing the contour lines is a process of producing the contour lines 6 with smoothly curved lines, with conducting a smoothing process upon the first topographic map 5 obtained from the processes mentioned above, wherein a portion having high density of the contour lines 6, such as, a cliff, for example, is treated with a process of smoothing the lines of segments, by considering them to be same to the lines of segments mentioned above, thereby producing a second (2nd) topographic map 7 (step 4), as is shown in Fig. 10, building up the contour lines 6 with a group of curved lines, which are obtained by conducting a mathematical process upon the curves, having a continuous differential coefficient (i.e., a differentiated value) and passing through a contact of those lines of segments. Further, that shown in Fig. 11 is an enlarged view of a portion of Fig. 10.

The second topographic map 7 produced in such the manner as was mentioned above, since it is produced by blocking into the irregular quadrilateral having the upside smaller than the bottom side, then if gathering such the blocked second topographic maps 7 in plural numbers thereof, there occurs a problem, such as, shifting on the contour lines 6 between the topographic maps neighboring to each other, etc.

For dissolving such the problem, the coordinate conversion is made upon the coordinate addresses on the irregular quadrilateral into the coordinate addresses on the equilateral quadrate, while maintaining the data and the number within that sector, through the known method, which is described in Japanese Patent Laying-Open No. 2000-118051 (2000), prior filed by the same applicant, thereby producing a third (3rd) topographic map 8 of equilateral quadrate, mathematically (step 5).

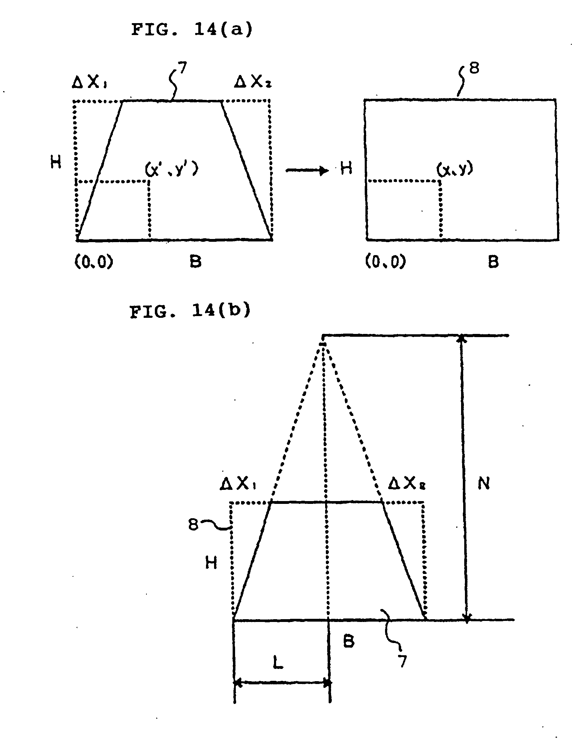

Those processes are performed with using the map producing system, in the similarmanner to that shown in the prior application, however explaining the method briefly, herein, Fig. 14(a) shows the second topographic map 7 at an arbitrary place, having the shape of an irregular quadrilateral, which is cut out from the projection data through the Gulls-Krugger drawing method, and a third topographic map 8 of the right-angled equilateral quadrate to be other part of the conversion thereof, wherein the algorithm of the coordinate conversion program designates a process of pattern conversion, from the coordinate of the irregular quadrilateral shown in Fig. 14(a) into the right-angledequilateral quadrate.

Both the second topographic map 7 and the third topographic map 8 are digital images or pictures, a unit of which is a pixel, however when converting them from the second topographic map 7 into the third topographic map, then the coordinate conversion is conducted, so that the same pixel alignment and the same pixel number can be maintained for both the topographic maps 7 and 8, and this is a basic idea or a way of thinking.

However, the coordinate conversion herein means an address conversion process, upon a memory where positioning (i.e., addressing) is made on the coordinates (i.e., addresses) of the irregular quadrilateral, into the coordinates address of the equilateral quadrate.

Assuming that the bottom sides and the heights of the second topographic map 7 and the third topographic map 8 shown in Fig. 14(a) have the same lengths, "B" and "H", respectively, then the third topographic map 8 is a right-angled equilateral quadrate, having width "B" and height "H", while the second topographic map 7 is shorter than that of the third topographic map 8, on the upside thereof, i.e. , by "ΔX1" at the left end, and by "ΔX2" at the right end thereof.

With this, since the second topographic map 7 is in the irregular quadrilateral, then it is assumed that an arbitrary position on the second topographic map is (x',y'), and that the position after graphic conversion thereof is (x,y) on the third topographic map 8.

Fig. 14(b) shows the condition of both the topographic maps 7 and 8, laying one on the top of the other, for the purpose of making the relationship of sizes clear of each other, wherein the height (i.e., y-coordinate) is "N" and x-coordinate thereof "L" when extending the irregular quadrilateral into a triangle on this figure.

As was mentioned above, since "H", "B", "N", "L", "B", "ΔX1", and "ΔX2" in Fig. 14 are values, which are already known if determining a cutout sector, therefore an equation of the coordinate conversion from (x', y') into (x,y) is as follows, by using each of such the values already known:

$$(x',y') = \left(L - \frac{(N-Y)\cdot(L-x)}{N}, y\right) \qquad \text{(Eq. 1)}$$

However, "L" and "N" are values, which can be obtained from the following equations:

$$N = \frac{H\cdot B}{\Delta X_1 + \Delta X_2} \qquad \text{(Eq. 2)}$$

$$N = \frac{\Delta X_1\cdot B}{\Delta X_1 + \Delta X_2}$$

Those equations, Eq. 1 and Eq. 2 can be obtained through the algebraic geometry, and the detailed processes thereof will be omitted herein.

Figs. 3 and 4 are views for showing an example of the coordinates upon the coordinate conversion from the second topographic map 7 into the third topographic map 8, where a picture size of 10x10 is shown therein, for the purpose of simplifying the explanation thereof, and this means that the same pixel number is maintained between the second topographic map 7 and the third topographic map 8 mentioned above.

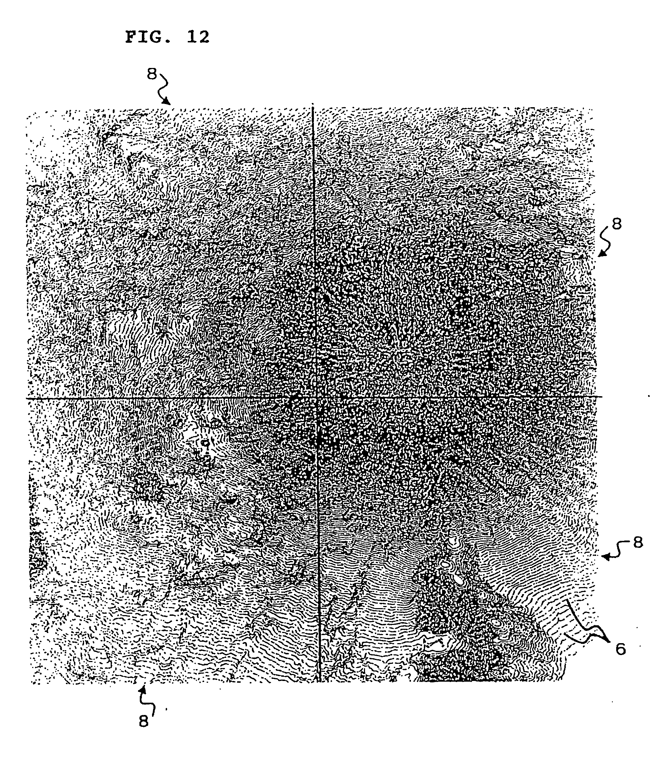

In Fig. 3, each of the coordinates of the irregular quadrilateral is so defined that, one (1) pixel (or unit) sector on a lower side is the largest, while the one (1) pixel (or unit) sector comes to be smaller as it goes up to an upper side, and then the each pixel (or unit) sector is in the shape of the irregular quadrilateral, on the coordinates system, on the other hand, each coordinate of the equilateral quadrate shown in Fig. 4 is in the coordinates system of being aligned, regularly, in the vertical and horizontal directions. And, if correcting the third topographic maps 8, for example, four (4) pieces thereof, then they comes to be a topographic map, on which the contour lines are continuous, but without shifting therein, as shown in Fig. 12.

Also, though no map element is displayed on those third topographic maps 8, however depending upon the necessity, it is possible to read out the map elements, which are stored within the data base 12 in advance, to be composed thereon, thereby to be displayed on the displaying means 13 of the topographic map producing system, or to be outputted on a paper, etc., as the topographic map, by using a printing means, such as, a printer, etc. However, if the map elements stored within the database are produced through the UTM drawing method, and in particular when composing the map elements, such as, the rivers, the seas, the railways, the roads, and the boundaries of cities, towns, and villages, for example, laying upon the top of the third topographic map 8, which is converted into the right-angled equilateral quadrate, in the formof the layer structure, then there is generated a problem of causing a shift in the map elements, in particular, between the topographic maps neighboring with each other.

For removing this, the above-mentioned coordinate conversion process is conducted upon the map elements, in the same manner to that of the second topographic map mentioned above, and then the each coordinate of the irregular quadrilateral is converted into the coordinate of the right-angled equilateral quadrate, thereby producing the map elements.

The contour line data and the map elements, which are produced in such the manner as was mentioned above, are stored within the database 12 in advance, therefore it is always possible to read out only the contour lines, alone, or together with the map elements, depending on the necessity, from the data base 12, and also since within the contour line data are included data of the sea level "h" in addition to the x,y plane data, then it is also possible to display the configuration of land in the three-dimensional manner, by conducting the 3-dimension process upon the contour line data in accordance with the conventional method; therefore, it is possible to obtain the most suitable topographic map to be used, in particular, civil engineering works, forecast of disaster, mountain-climbing, etc.

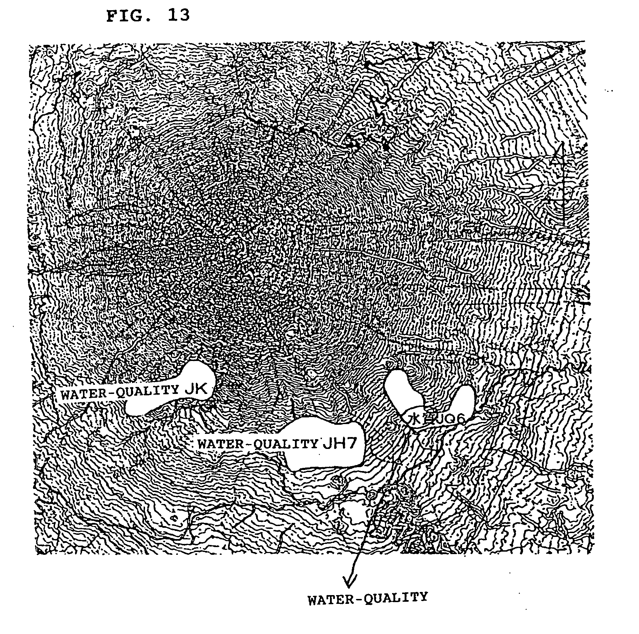

Fig. 13 shows an example of the topographic map, in the vicinity of the Fuji Mountain, displaying the data obtained from the survey of water resources, being composed thereon, wherein water quality of headwater can be displayed by classifying it by color, thereby enabling to grasp the resources, easily.

On the other hand, the data format of the map elements, which are stored within the database 12, is digital vector (i.e., the vector data), including therein a place name, a station name, and position information; such as, the longitude and the latitude, and an altitude or height (i. e. , the sea level) from the benchmark, which is displayed for each contour line, in the form of character or text data, other than those mentioned above, such as the rivers and so on. And, it is possible to color the third topographic map depending upon the sea level, or to color the contour lines 6 by separated colors, differently, one by one, depending upon the height, or to color the up and down of the road and/or the mountain path, which is composed onto the topographic map to be displayed, etc.; thereby enabling to add the following functions thereto.

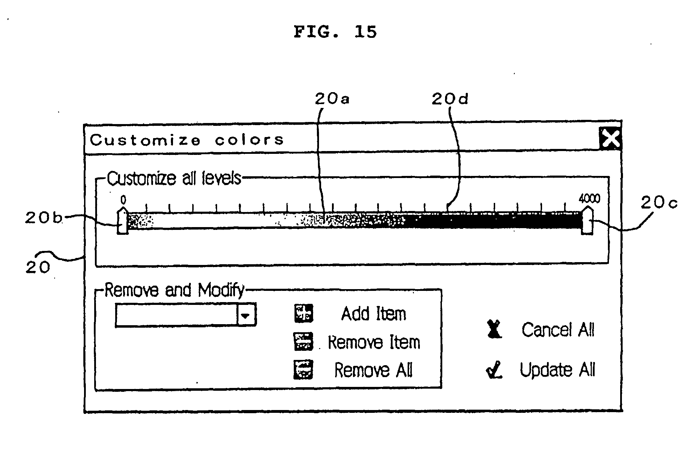

Fig. 15 shows a dialog 20 for executing the function of coloring the topographic map of an arbitrary place, which is displayed on the displaying means 13, depending on the sea level, and within the dialog 20 are displayed a color scale 20a for displaying the sea levels from 0m up to 4,000m, by coloring them from green to brown color, sequentially, such as, two (2) pieces of slide bars 20b and 20c, being freely movable along with the color scale 20a, and a sea level scale mark 20d attached along the color scale 20a, etc.

As a method for using this dialog 20, after calling up the topographic data stored within the database 12, with an aid of a map number 22a or a map name 22b attached to each of the third topographic maps 8 in advance, for example, to be displayed on the displaying means 13, then the dialog 20 is displayed.

In the color scale 20a of the dialog 20 are divided into colors from green to brown color, sequentially, in accordance with an increase of the sea level, and if the color is acceptable as is displayed therein, an execute button not shown in the figure is clicked. And then, the third topographic map 8 displayed on the displaying means 13 is displayed, with coloring the each sea level into separated colors depending upon color classification of the color scale 20a, as well as, when displaying the map elements, such as, the road and/or the mountain path, for example, composed onto the third topographic map obtained, the up and down of the road and/or the mountain path, etc., are displayed by colors, separately; thereby, enabling to make determination on which the road is an uphill or a downhill, easily, and to obtain a color topographic map through outputting this on a paper or the like, composing the map elements thereon.

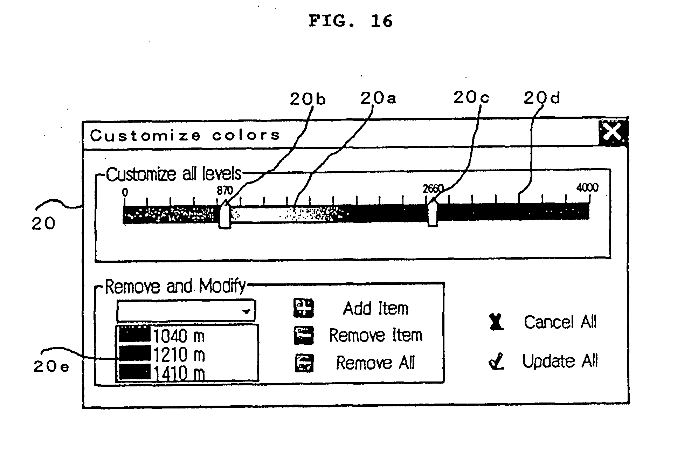

Also, Fig. 16 shows a function for changing the region of the coloring of the third topographic map 8 displayed on the displaying means 13, arbitrarily, wherein the sea level to be colored into green color can be changed, arbitrarily, by shifting the slide bar 20b on the left-hand side, which is provided within the color scale 20a of the dialog 20, into the right-hand side along with the color scale 20a.

In the case of this Fig. 16, it displays the condition where the coloring into green color is made, up to the vicinity of 870m, for example.

In the similar manner, when the slide bar 20c located at the right-hand side of the color scale 20a is shifted into the left-hand side, it is possible to change the sea level to be colored into brown color, arbitrarily, and when the slide bar 20c is shifted into the vicinity of 2,660m, for example, the portions higher than the sea level of 2,660m is displayed to be colored into brown.

This function is provided for, since almost of the parts thereof are displayed by the same color, such as, green or brown color, in particular, when the coloring is made on the third topographic map 8 of a flatland, being small in the difference of the sea level, or a mountainous area where high mountains laying in a raw, for example, by each of the sea levels thereof, and then it comes to be difficult to determine the difference of altitude or elevation therefrom; therefore, it is for use of preventing the topographic map from such the difficulty. And, shifting of the slide bars 20b and 20b, which are provided on both side of the color scale 20a of the dialog 20, into the right-hand side or the left-hand side along with the color scale 20a, enables to change the sea levels to be colored into green or brown color, arbitrarily, and therefore it is possible to obtain the third topographic map 8, which is finely divided by colors depending on the sea levels, even if it is that having no difference in the sea level; such as, the configuration of a low land or a high land, for example; therefore, it is possible to made determination on the difference of altitude.

Also, a color bar 20e displayed below at the left-hand side within the dialog 20 shown in Fig. 16 is for showing the function of coloring the contour lines by colors, arbitrarily, for each sea level; for example, if designating that 1, 040m is colored by brown color, 1,210m by blue color, and 1,410m by red color, then, on the displaying means 13 is displayed the third topographic map 8, on which the contour line indicative of 1,040m is colored into brown color, that indicative of 1,210m into blue color, and that indicative of 1,410m into red color, respectively, and this can be also outputted on a paper, etc.

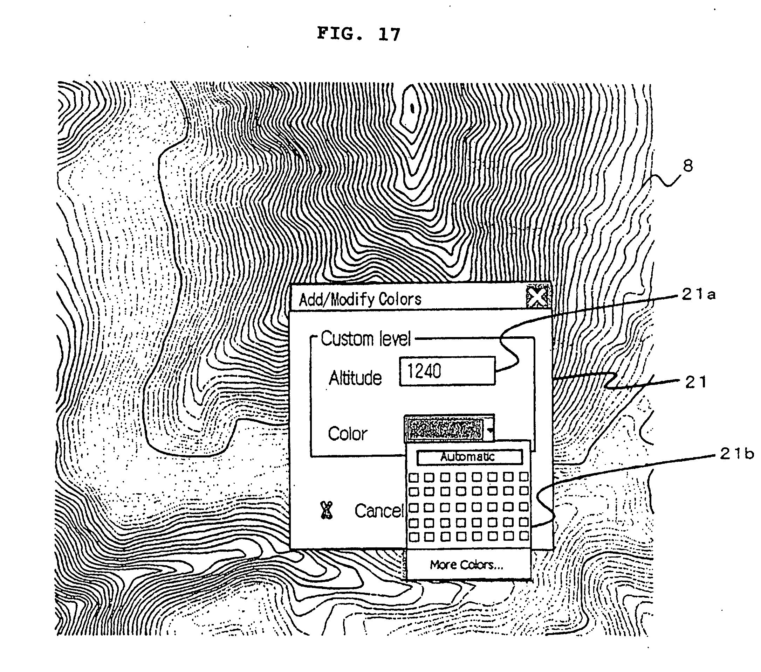

Fig. 17 is for showing an execution screen or display when coloring the contour lines 6 on the third topographic map 8, which is displayed on the displaying means 13, into arbitrary colors, whereby it is possible to color arbitrary contour lines 6 into colors, arbitrarily, by means of the dialog 21 which is displayed on the displaying means 13 together with the third topographic map 8, or change the colors of the contour lines.

Namely, after displaying the sea level to be colored on a sea level display column 21a of the dialog 21, then an arbitrary color is designated by means of a color pallet 21b; thereby enabling to display the contour line 6 by a desired color to be displayed on the third topographic map 8, as well as, to select it into other color on the color pallet 21b; therefore, it is also possible to change the color, easily.

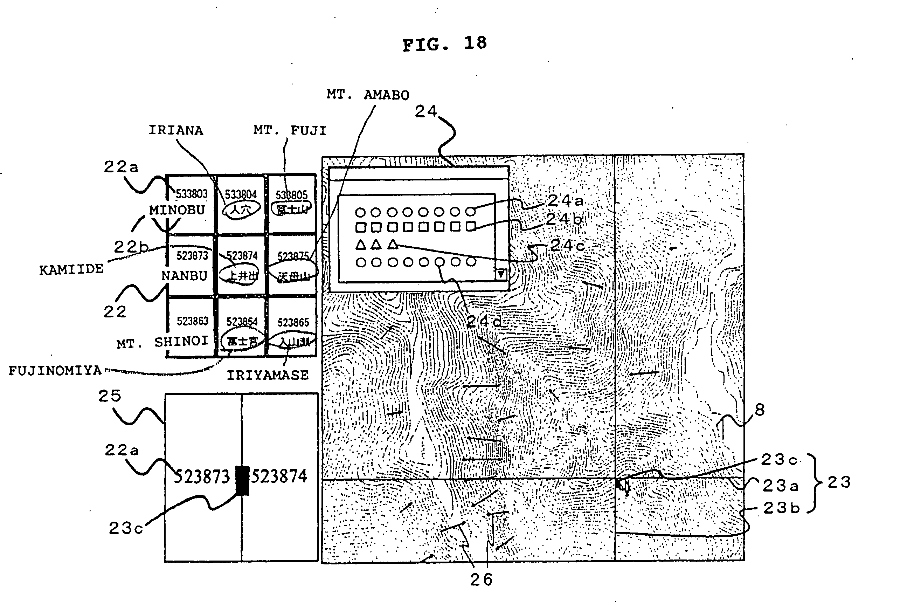

Fig. 18 shows an example of displaying the third topographic map 8 of the arbitrary place, which is called up by the map number 22a or the map name 22b from the database 12, wherein at the same time, eight (8) places in the vicinity of the third topographic map 8 displayed on the displaying means 13 are displayed by the map numbers 22a and the map names 22b thereof, on the sub-screen 22 located above at the left-hand side.

Also, on the third topographic map 8 displayed in the screen of the displaying means 13, there is displayed a cursor 23, being made with an X-axis cursor 23a and Y-axis cursor 23b, crossing with each other, and accompanying with shifting of an intersecting point 23c of the cursor 23, the position of the arbitrary intersecting point 23c is displayed on the dialog 24; i.e., by the north latitude 24a and the east latitude 24b, and at the same time is also displayed the sea level thereof.

Since the third topographic maps 8 displayed on the displaying means 13 are composed with each other, so that the contour lines 6 are continuous at a joint portion thereof, it is possible to scroll to the neighboring third topographic map 8, continuously, by shifting the intersecting point 23c of the cursor 23, as well as, to make determination upon the position, easily, where the intersecting point 23c of the cursor 23 lies at the present, on the topographic map, through watching on the sub-screen 25 positioned at the left-hand side below.

Namely, the map number 22a neighboring to the sub-screen 25 is displayed on the sub-screen 25, and if there is the intersecting point 23c of the cursor 23 between those map numbers 22a, it can be easily determined that the third topographic map 8 is displayed on the displaying means 13 while covering over the neighboring topographic maps.

Also, there is indicated a direction of inclination (or gradient) by means of an arrow 26, on the third topographic map 8 that is displayed on the displaying means 13.

An arrow 26 indicative of the gradient shows that the configuration of land inclines downward to be low in the direction of the arrow, and the length of the arrow 26 indicates a magnitude of the inclination; i. e. , the inclination thereof, and if fitting the intersecting point 23c of the cursor 23 to the arrow 26, then a numeral value 24d of that gradient is displayed within the dialog 24.

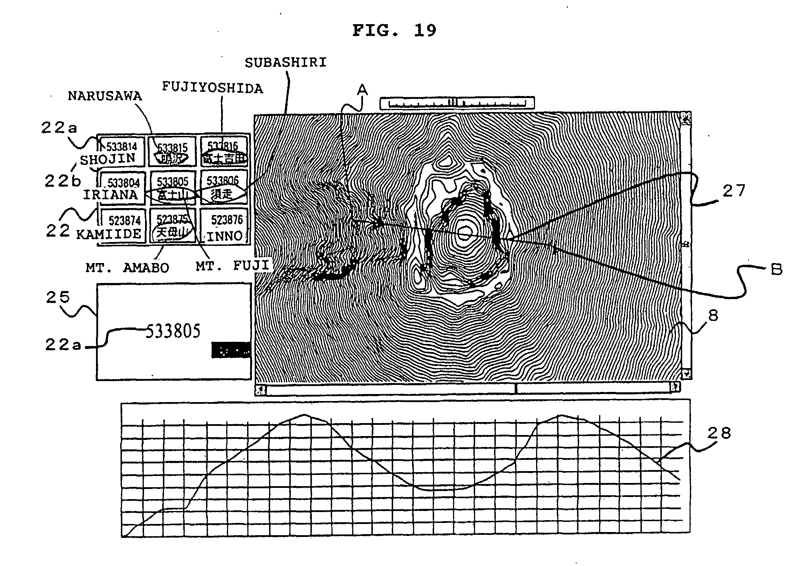

Fig. 19 shows an example of displaying the topographic map of the Mt. Fuji (the map number: 533805, the map name: Mt. Fuji) on the displaying means 13, wherein the map numbers 22a and the map names 22b of the Mt. Fuji and the vicinity thereof are displayed on the sub-screen 22 locating above at the left-hand side, while the map number "533805" of the Mt. Fuji on the sub-screen 25 locating below at the left-hand side thereof.

A straight line 27 displayed, being drawn crossing over the summit of the Mt. Fuji on the third topographic map 8 displayed, is for the purpose of setting or determining the cross-section between arbitrary two (2) points, such as, A-B, for example, on the third topographic map 8 displayed. When the point A and the point B are set on the third topographic map 8, the cross-section of the third topographic map 8 is displayed enlargedly, in a lower side of the screen, which is cut by the straight line 27 connecting between the point A and the point B, in the form of the cross-section view 28 thereof.

On the vertical axis of the cross-section view 28 is displayed the sea level by a numeral thereof, while on the horizontal axis the distance also by a numeral thereof (unit of the both is "m=meter" ) , and therefore, it is possible to grips the diameter and the depth, etc. , of the so-called "cauldron" formed on the summit of the Mt. Fuji, if seeing this cross-section view 28, and it is also possible to display the cross-section at an arbitrary position, in a lower side portion of the screen, in the form of the cross-section view 28, by shifting the position of the straight line 27 defined between A-B.

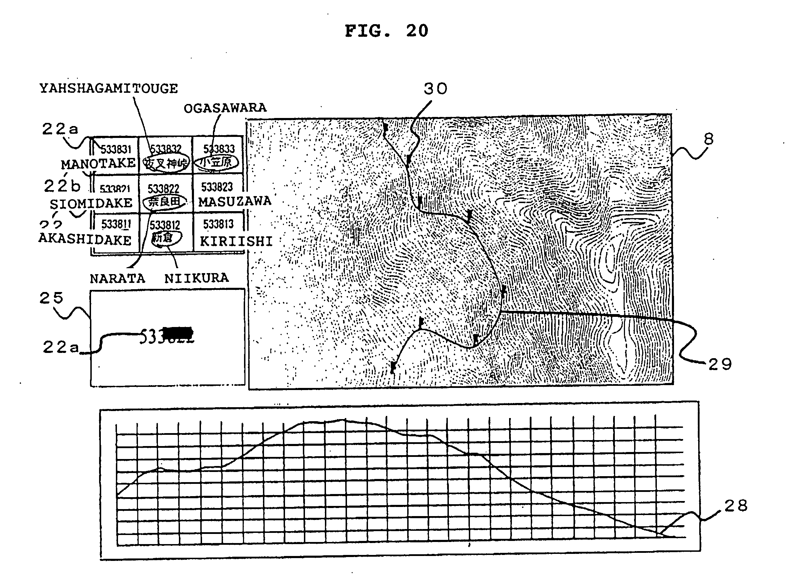

Fig. 20 shows an example of cutting the third topographic map 8 at an arbitrary position, but by a curved line 29, thereby showing it in the lower side on the screen, in the form of the cross-section view 28.

As a method of using this third topographic map 8, it is effective of being used for making study on the position or location where steel towers should be constructed of a high-voltage cable, on the third topographic map 8, when constructing the steel towers of the high-voltage cable in a certain place or area, for example.

First, while displaying the third topographic map 8 of the area where the high-voltage cable should be laid, on the displaying means 13, marking 30 are set in plural numbers thereof at the destination of constructing the steel towers on the third topographic map 8.

And, since connecting those marks 30 by the curved line 29 brings the cross-section view 28 of the third topographic map 8 to be displayed in the lower side on the screen, which is cut by the curved line 29, therefore it is possible to design the height of the steel tower by referring to that cross-section view 28, and/or to determine the places for building up the steel towers, the places for building up the steel towers of the high-voltage cable, and a route of laying the high-voltage cable, by examining or comparing the places for building the steel towers, without necessity of making the measurement at an actual building site or construction field.

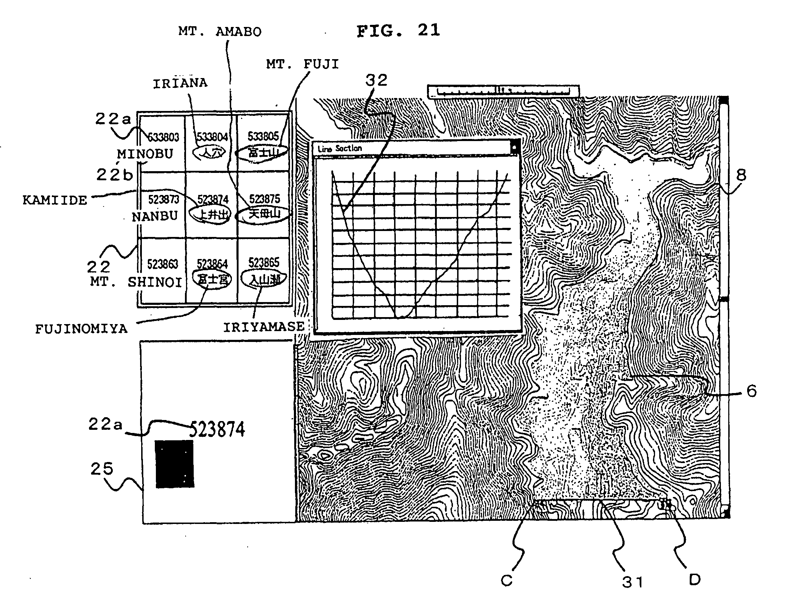

Fig. 21 shows an example of calculating out the pondage or the volume of water kept in a dam, through connecting arbitrary two (2) points C-D, by a straight line 31 crossing over a river, for example, within the third topographic map 8 displayed on the displaying means 13, and with this, it is possible to calculates out how much of the pondage can be obtained from, instantaneously, when constructing the dam at a certain place along the river displayed on the third topographic map 8.

Namely, when connecting the straight line 31 between the two (2) points C-D set crossing over the river on the third topographic map 8, the cross-section view 32 of the third topographic map 8 cut by the straight line 31 is displayed on the screen, and also the contour line 6, on which the points C and D are set up, is displayed by red color, for example, at the same time; therefore, it is possible to calculate out the pondage from the portion enclosed by the contour line 6 and the straight line 31 and the configuration of the cross-section thereof.

In a case where the pondage of the dam is determined with this, in advance, since determination can be made upon a position where the dam should be constructed along the river, on the third topographic map 8, therefore it is possible to shorten the period necessary for the planning of constructing the dam, greatly.

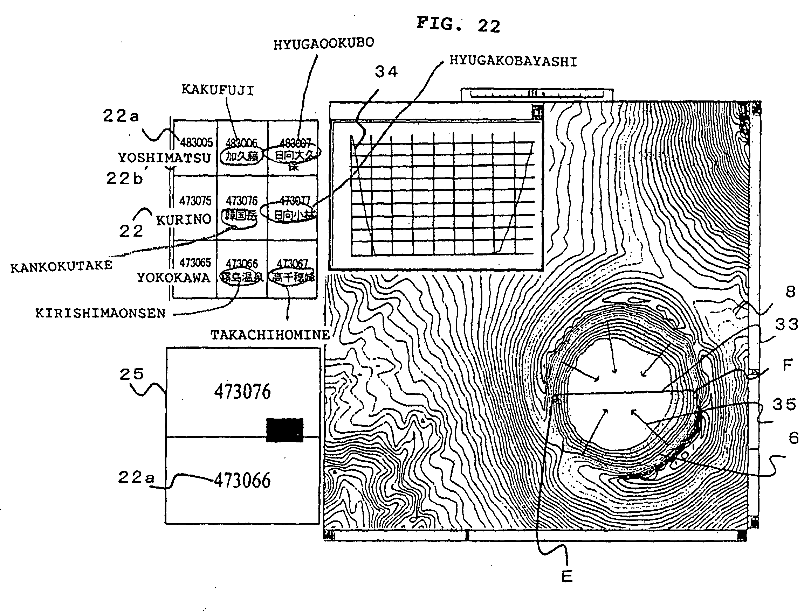

Fig. 22 shows the cross-section view 34 for calculating out the volume of the lake or the swamp while cutting the lake or the swamp by a straight line 33 connecting between arbitrary two (2) points E-F, wherein the colored contour line 6 surrounding the lake or the swamp indicates a watershed thereof, and when connecting those two (2) points E-F with the straight line 33 by setting the pint E and the point F on the colored contour line 6, then the cross-section view 34 of the lake or the swamp cut by the straight line 33 is displayed in a portion of the screen.

An arrow 35 displayed, directing to a center of the lake or the swamp, indicates the direction of gradient, and the length thereof indicates a magnitude of the gradient, whereby the depth and the sized of the lake and/or the swamp can be known, easily, from the sea level displayed on the vertical axis and the distance displayed on the horizontal axis (unit for both is "m") of the cross-section view 34.

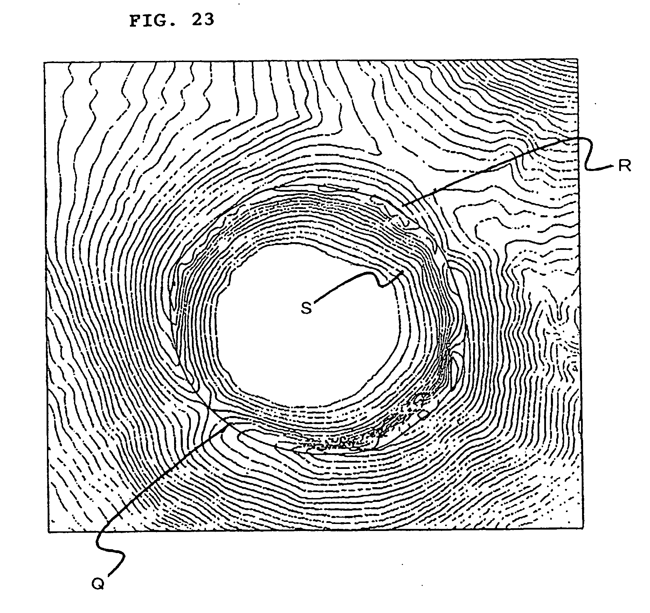

Fig. 23 is an enlarged view of a portion of the lake or the swamp on the third topographic map 8 shown in Fig. 22, wherein a part of rains falling on the lake or the swamp; i. e. , for example, the rains falling within an inside of the watershed, which is indicated by the colored contour line R connecting the most highest portions of the ridges surrounding the lake or the swamp, rushes into the lake or the swamp, while the rains falling in an outside thereof flows down into a valley or the like, along with a slope of a mountain, but without rushing into the lake or the swamp.

In a case where a dam is constructed at the position Q of the lake or the swamp, and when the water of the lake or the swamp flows out exceeding over that dam, a volume defined within the region of contour line S, which is regulated by the height of the dam Q, comes to be the quantity of water of the lake or the swamp, and the value obtained by subtracting the quantity of water, percolating downward into underground through the soil to be ground water, from an amount of rains falling within the region of the colored contour line R, is the quantity of water flowing out by the means of the dam Q. And, the calculation is automatically conducted on the quantity of water, by clicking a button provided in advance, but not shown in the figure.

Further, although a bed of the river is displayed by the contour line 6 on the third topographic map 8, in particular, the river in a mountainous region, directing from a high land down to a lowland, like a road, however if connecting the two (2) points, which are set crossing over the river, the pondage can be calculated out from the configuration of the cross-section, but by the straight line, as was explained when calculating out the pondage of the dame before. And, if conducing the operation of setting the two (2) points on both sides of the river, centering around the bed of the river, at an arbitrary distance therebetween, covering over an entire area of the river, so as to make up data of the areas on the cross-sections, it is possible to obtain a disaster prevention map or a hazard map, for forecasting the portion on the river, where overflow will occur when heavy rain falls.

On the other hand, as the map elements, such as, a road, a river, a railway, a mane of place, etc., which were mentioned previously, the database are used herein, which is produced by the Geographical Survey Institute of Japan, in advance, however the map elements are changing every hour, from moment to moment, due to natural phenomena and/or changes of artificial environments ; however, with the conventional map elements which are stored within the database, it is difficult to deal with the changes; such as, generation of a landslide due to heavy rain falling within the mountainous region, new construction of a road or a railway, development of a farmland from mountains and forests, etc.

For the purpose of making an improving on this, the system is so constructed that a user can store user map elements, which are produced by the user, independently, as additional information into the database 12, so as to call up them from that database, depending upon the necessity thereof. Thus, the additional information that the user necessitates, or alternatively the user map elements, which are called up by the additional information and the position, can be displayed, laying on the top of the third topographic map 8; therefore, it is possible to obtain the topographic map corresponding to the purpose of use by the user, easily.

Those various kinds of functions mentioned above can be achieved, by calling up the contour line data, which are stored within the database 12 in advance, so as to be mathematically calculated by the CPU 10, however since the contour line data stored within the database 12 is produced through the interpolation of, such as, the data between the each contour line 6, therefore it is possible to display the distance between the contour lines 6 at an arbitrary distance, such as, 10m, 20m, etc. , with using that interpolated contour line data, and in particular, at the place where the configuration of land is complex, such as, a cliff or the like, it is possible to display the configuration of land in more details thereof, by making the distance between the contour lines 6 narrow.

Since the data obtained through the survey of the natural resources are stored into the database 14, it is also possible to obtain a use thereof, for example, composing them onto the topographic map displaying the contour lines 6 thereon, to be outputted, and so on.

Although the digital topographic map, on which are displayed the detailed contour lines, is produced upon the basis of the digital data obtained from the digital topographic map issued by the Geographical Survey Institute of Japan, in the embodiment mentioned above, however of course, it is also possible to apply others, as far as the contour lines thereof are digitalized.

## INDUSTRIAL APPLICABILITY

As was mentioned above, according to the digital producing method according to the present invention, it is possible to obtain a digital topographic map, on which the contour lines are displayed by smooth curved lines, in a short time and with ease, and there occurs less artificial mistaken, comparing to the case when processing an expansive amount of measured data by handworks, thereby obtaining an improvement, largely, in particular, in accuracy and reliability of the topographic maps.

And, it is also possible to compose the map element(s) onto the second topographic map displaying the contour lines thereon, in the layer structure, to be displayed on the displaying means, easily, or alternatively, to conduct the operation of outputting it/them onto a paper, etc., as the topographic map, with ease, and further to compose only a part of the map elements onto the second topographic map, depending upon the necessity thereof; therefore, a usability or a convenience of the topographic map can be further improved.

Moreover, it is possible to color the each sea level by an arbitrary color, therefore a color topographic map can be easily obtain, with coloring a flatland by green color, while coloring separately from green to brown color, sequentially, in accordance with an increase of the sea level, as well as, the third topographic map, on which the classification is made finely by colors, through finely designating the coloring region of the contour lines, in particular, in the case of the topographic map of, such as, the flatland, for example.

Further, through designing the height of the steel tower and/or studying on the positions for building up the steel towers, by referring the cross-section view, while displaying the cross-section view of the third topographic map cut by the straight line or the curved line in a part of the displaying means, it is possible to determine the positions for buildingup the steel towers, the positions for building up the steel towers for a high-voltage cable and/or the route for laying the high-voltage cable, but without necessity of making measurement on the actual building site or construction field. And also, through setting arbitrary two (2) points on the contour line of the same sea level on the third topographic map, which is displayed on the displaying means, so as to connect those two (2) points by a straight line, in a manner of crossing over a river, the pondage in the upstream side upper than that straight line can be calculate out from the contour line, the straight line and the cross-section view thereof; therefore, it is possible to calculate out, i.e., how much of the pondage can be obtained from when constructing the dam at which position along the river displayed on the third topographic map, instantaneously.

## Claims

1. A method for producing a digital topographic map, comprising the following steps of:

   a step for dividing a basic map, which is produced through UTM drawing method, into grid-like sectors at a predetermined distance, and further dividing the sector obtained into a smaller one, thereby producing small sectors while interpolating discontinuous data being in short between each sectors and within each of the sectors;

   a step for producing digital data by relating x, y coordinates of the small sector obtained and a sea level obtained through measurement, upon basis of an algorithm having a rationality, and connecting the small sectors being same in the sea level thereof with a straight line, thereby producing a first topographic map, on which contour lines are formed with lines of segments; and

   a step for conducting a smoothing process upon the contour lines of said first topographic map, mathematically, thereby producing a second topographic map, on which the contour lines are formed with curved lines, being smoother than the contour liens of said first topographic map, which are formed with the lines of segments.

2. The method for producing a digital topographic map, as described in the claim 1, wherein the digital data for producing said second topographic map therefrom is stored with map element data into a recording means, and those data are displayed on a display means, being composed into a single or a layer structure thereof, or can be outputted on a paper or the like, as a topographic map.

3. The method for producing a digital topographic map, as described in the claim 1 or 2 , wherein a checking function is provided for checking on whether the mathematical process is conducted, appropriately or not, so that the lines of segments come cross with each other, when producing said first topographic map, by connecting said small sectors having the same sea level, sequentially.

4. The method for producing a digital topographic map, as described in one of the claims 1 to 3, wherein the irregular quadrilateral, which is produced upon basis of the basic map and the map elements through said UTM drawing method is revised and interpolated, mathematically, to be a right-angled quadrilateral, thereby producing a third topographic map.

5. The method for producing a digital topographic map, as described in the claim 1, wherein user map elements, which are produced independently by a user, are stored into said recording means as a database, and those user map elements and said third topographic map are displayed on said display means, being composed into a single or a layer structure thereof, or can be outputted on a paper or the like, as a topographic map.

6. A method for producing a digital topographic map, comprising the following steps of:

   a step for dividing a basic map, which is produced through UTM drawing method, into grid-like sectors at a predetermined distance, and further dividing the sector obtained into a smaller one, thereby producing small sectors while interpolating discontinuous data being in short between each sectors and within each of the sectors;

   a step for producing digital data by relating x, y coordinates of the small sector obtained and a sea level obtained through measurement, upon basis of an algorithm having a rationality, and connecting the small sectors being same in the sea level thereof with a straight line, thereby producing a first topographic map, on which contour lines are formed with lines of segments;

a step for conducting a smoothing process upon the contour lines of said first topographic map, mathematically, thereby producing a second topographic map, on which the contour lines are formed with curved lines, being smoother than the contour liens of said first topographic map, which are formed with the lines of segments;

a step for revising and interpolating the irregular quadrilateral, which is produced upon basis of the basic map and the map elements through said UTM drawing method, mathematically, to be a right-angled quadrilateral, thereby producing a third topographic map from said second topographic map; and

a step for storing digital data for producing said third topographic map, into a recording means, together with map element data, and thereby displaying those data on a display means, being composed into a single or a layer structure thereof, or outputting them on a paper or the like, as a topographic map.

**7.** The method for producing a digital topographic map, as described in the Claim 6, wherein upon the third topographic map displayed on said display means are displayed a color scale, which is divided by colors depending upon the sea levels, and a dialog having a slide bar, which is freely movable along said color scale, whereby said third topographic map can be colored by an arbitrary color for each of the sea levels by moving said slide bar along with said color scale.

**8.** The method for producing a digital topographic map, as described in the Claim 6, wherein upon said third topographic map displayed on said display means are displayed a sea level displaying column for indicating a sea level of an arbitrary contour line therein, and a dialog having a color palette for designating a color of the contour lien to be colored, whereby the contour lines of said third topographic map can be colored with an arbitrary color for each of the sea levels thereof by inputting the sea level of the contour line to be colored into said sea level displaying column and a color through said color pallet.

**9.** The method for producing a digital topographic map, as described in any one of the Claims 6 to 8, wherein a sub-screen is displayed on said display means, on which said third topographic map is displayed, and on said sub-screen are displayed a third topographic map on a periphery continuous with the third topographic map of an arbitrary place that is displayed on said display means, by a map number and/or a map name.

**10.** The method for producing a digital topographic map, as described in any one of the Claims 6 to 9 , wherein on said display means is displayed said third topographic map, together with an X-axis cursor and a Y-axis cursor intersecting in a cross, whereby displaying latitude and altitude of said intersecting point are displayed in a portion of said display means, by moving said X-axis and said Y-axis cursors into an arbitrary direction, so as to fit the intersecting point at an arbitrary place on said third topographic map.

**11.** The method for producing a digital topographic map, as described in any one of the Claims 6 to 10, wherein points are set up in plural numbers thereof on said third topographic map displayed on said display means, and those plural numbers of points are connected by a straight line or a smoothly curved line, whereby displaying a cross-section of said third topographic map, being cut by said straight line or said curved line, in a part of said display means.

**12.** The method for producing a digital topographic map, as described in any one of the Claims 6 to 11, wherein arbitrarily two (2) points are set up on the contour line, having the same sea level upon said third topographic map displayed on said display means, intersecting a river thereby, and those two (2) points are connected with a straight line, whereby displaying a cross-section of the river cut by said straight line, in a part of said display means, and also calculating out pondage in an upstream side thereof than said straight line, from said contour lines, and said straight line and said cross-section.

**13.** The method for producing a digital topographic map, as described in any one of the Claims 6 to 12, wherein arbitrarily two (2) points are set up on the contour line, having the same sea level, surrounding a lake or a swamp on said third topographic map displayed on said display means, intersecting the lake or the swamp thereby, and those two (2) points are connectedwith a straight line, whereby displaying a cross-section of the lake or the swamp cut by said straight line, in a part of said display means, and also calculating out pondage of said lake or the swamp, from said contour lines and said cross-section.

**14.** The method for producing a digital topographic map, as described in any one of the Claims 6 to 13, wherein upon said third topographic map displayed on said display means is displayed an arrow of indicating a direction and/or a magnitude of an inclination of configuration of land.

**15.** An apparatus for producing a digital topographic map, comprising:

a means for dividing a basic map, which is produced through UTM drawing method, into grid-like sectors at a predetermined distance, and further dividing the sector obtained into a smaller one, thereby producing small sectors while interpolating discontinuous data being in short between each sectors and within each of the sectors, and reading sea levels from digital data of the digital topographic map, so as to be aligned on a plane to be blocked, thereby producing mesh-like data, and further storing them as vector data therein;

a means for producing a first topographic map, by reading out the vector data for each of the small sectors stored in said storing means, so as to conduct a process of connecting the each small sector with a straight line while selecting a measurement point in vicinity thereof when the sea is same judging from data of defining tolerance on the sea level, without intersection on those line segments with each other, upon basis of an algorithm having rationality;

a means for producing a second topographic map, by conducting a smoothing process upon curved lines, passing through a contact point of the line segments of said first topographic map obtained in said process, and having continuous differential coefficients , mathematically, thereby producing the second topographic map, on which the contour lines are made up with a group of curved lines;

a means for producing a third topographic map from said second topographic map, by revising and interpolating an irregular quadrilateral, which is produced upon basis of said basic map produced through the UTM drawing method, and also map elements, mathematically, into a right-angled quadrilateral;

a recording means for storing therein said digital data for producing said third topographic map, together with map element data; and

a display means for composing the digital data stored within said recording means into a single or a layer structure, so as to display thereon.

FIG. 1

2
1
3

FIG. 2

80°
60°
40°
20°
0°

FIG. 3

50m
7

FIG. 4

50m
4
8

FIG. 5

10
CPU
MAIN MEMORY
12
DATABASE
DISPLAY BUFFER
CRT
13
KEYBOARD
HDD
11

FIG. 6

PRODUCE SMALL SECTOR BY DIVIDING BASIC MAP PRODUCED THROUGH UTM METHOD
S 1
PRODUCE DIGITAL DATA BY RELATING x,y COORDINATES OF SMALL SECTION AND MEASURED DATA
S 2
PRODUCE 1ST TOPOGRAPHIC MAP FORMED WITH CONTOUR LINES OF STRAIGHT LINES, BY CONNECTING EACH SMALL SECTOR OF SAME SEA LEVEL BY STRAIGHT LINE
S 3
PRODUCE 2ND TOPOGRAPHIC MAP FORMED WITH CONTOUR LINES OF SMOOTHLY CURVED LINE, THOUGH CONDUCTING SMOOTHING PROCESS ON CONTOUR LINES OF 1ST TOPOGRAPHIC MAP, MATHEMATICALLY
S 4
PRODUCE 3RD TOPOGRAPHIC MAP, THROUGH CONDUCTING PROCESS TO CHANGE 2ND TOPOGRAPHIC MAP OF IRREGULAR QUADRILATERAL PRODUCED ON BASIS OF BASIC MAP INTO RIGHT-ANGLED QUADRATE, MATHEMATICALLY
S 5

FIG. 7

FIG. 8

5

FIG. 9

5

FIG. 10

6
7

FIG. 11

6
7

FIG. 12

FIG. 13

WATER-QUALITY JK
WATER-QUALITY JH7
水質JQ6
WATER-QUALITY

FIG. 14(a)

FIG. 14(b)

ΔX1
7
ΔX2
8
H
(x', y')
H
(x, y)
(0, 0)
B
(0, 0)
B
ΔX1
ΔX2
N
8
H
B
7
L

Customize colors
Customize all levels
0
4000
Remove and Modify
Add Item
Remove Item
Remove All
Cancel All
Update All
20a
20b
20c
20d
20

FIG. 15

Customize colors
Customize all levels
0
870
2660
4000
Remove and Modify
1040 m
1210 m
1410 m
Add Item
Remove Item
Remove All
Cancel All
Update All
20
20a
20b
20c
20d
20e

FIG. 16

FIG. 17

8
21a
21
21b
Add/Modify Colors
Custom level
Altitude
1240
Color
Cancel
Automatic
More Colors...

FIG. 18
24
24a
24b
24c
24d
8
23
23a
23b
23c
26
MT. AMABO
MT. FUJI
IRIANA
MINOBU
KAMIIDE
NANBU
MT. SHINOI
FUJINOMIYA
IRIYAMASE
533803
533804
533805
523873
523874
523875
523863
523864
523865
22
22a
22b
25
523873
523874

A
B
27
8
28
SUBASHIRI
FUJIYOSHIDA
NARUSAWA
MT. AMABO
MT. FUJI
533814
SHOJIN
533815
533816
533804
IRIANA
533805
533806
523874
KAMIIDE
523875
523876
INNO.
533805
22a
22b
22
25
22a

FIG. 19

FIG. 20
8
29
30
28
YAHSHAGAMITOUGE
OGASAWARA
MASUZAWA
KIRIISHI
533831
533832
533833
MANOTAKE
533821
533822
533823
SIOMIDAKE
533811
533812
533813
AKASHIDAKE
NARATA
NIIKURA
22a
22b
22
25
22a

MT. FUJI
MT. AMABO
IRIANA
MINOBU
NANBU
MT. SHINOI
KAMIIDE
FUJINOMIYA
IRIYAMASE
533803
533804
533805
523873
523874
523875
523863
523864
523865
523874
Line Section
22a
22b
22
25
32
8
6
31
C
D

FIG. 21

FIG. 22
8
33
F
35
6
E
34
HYUGAKOBAYASHI
HYUGAOOKUBO
KAKUFUJI
483005
483006
483007
473075
473076
473077
473065
473066
473067
YOSHIMATSU
KURINO
YOKOKAWA
KANKOKUTAKE
KIRISHIMAONSEN
TAKACHIHOMINE
473076
473066
22a
22b
22
25
22a

FIG. 23

R
S
Q

## INTERNATIONAL SEARCH REPORT

International application No.
PCT/JP03/05038

A. CLASSIFICATION OF SUBJECT MATTER
Int.Cl[7] G09B29/00

According to International Patent Classification (IPC) or to both national classification and IPC

B. FIELDS SEARCHED

Minimum documentation searched (classification system followed by classification symbols)
Int.Cl[7] G09B29/00-29/14, G06T17/50

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 6-67605 A (Hitachi, Ltd. et al.), 11 March, 1994 (11.03.94), Full text; Figs. 1 to 21 (Family: none) | 1-15 |
| Y | JP 9-69148 A (Tokyo Gas Co., Ltd.), 11 March, 1997 (11.03.97), Page 3, column 4, lines 38 to 41; page 5, column 7, lines 40 to 50; Figs. 2, 6 (Family: none) | 1-3,5,6,15 |
| Y | JP 2000-242812 A (Hitachi, Ltd.), 08 September, 2000 (08.09.00), Full text; Figs. 1 to 35 (Family: none) | 4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 July, 2003 (22.07.03) | 05 August, 2003 (05.08.03) |
| Name and mailing address of the ISA/ Japanese Patent Office | Authorized officer |
| Facsimile No. | Telephone No. |

Form PCT/ISA/210 (second sheet) (July 1998)

INTERNATIONAL SEARCH REPORT

International application No.
PCT/JP03/05038

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-333563 A (Nissan Motor Co., Ltd.), 18 December, 1998 (18.12.98), Full text; Figs. 1 to 19 (Family: none) | 7,8 |
| Y | JP 11-282861 A (Hitachi, Ltd.), 15 October, 1999 (15.10.99), Full text; Figs. 1 to 7 (Family: none) | 9 |
| Y | JP 11-282344 A (Pioneer Electronic Corp.), 15 October, 1999 (15.10.99), Full text; Figs. 1 to 8 (Family: none) | 10 |
| Y | JP 2001-140257 A (JEC Co., Ltd.), 22 May, 2001 (22.05.01), Full text; Figs. 1 to 20 (Family: none) | 11-13 |
| Y | Miyuki KAWASHIMA et al., "Daikibo Setsudan sareta Tokosenzu ni Taisuru Risan Kodo Fuyoho", The Transactions of the Institute of Electronics, Information and Communication Engineers, 25 September, 1997 (25.09.97), Vol.J80-D-II, No.9, pages 2308 to 2315 | 14 |
| A | Shigeru MURAKI et al., Seikika-ho ni yoru Tokosen Gazo kara no Kyokumen Saikosei", The Transactions of the Institute of Electronics, Information and Communication Engineers, 25 November, 1990 (25.11.90), Vol.J73-D-II, No.11, pages 1854 to 1862 | 1-15 |
| A | Miyuki KAWASHIMA et al., "Voronoi-sen Zuho oyobi Gyaku 2 jo Ba-Model ni yoru Heiretsu Tokosen Joho Shoriho no Kosokuka", The Transactions of the Institute of Electronics, Information and Communication Engineers, 25 July, 1994 (25.07.94), Vol.J77-D-II, No.7, pages 1219 to 1225 | 1-15 |

Form PCT/ISA/210 (continuation of second sheet) (July 1998)